# EUROPÄISCHE PATENTSCHRIFT

(11) **EP 1 686 044 B1**
(45) Veröffentlichungstag und Bekanntmachung des Hinweises auf die Patenterteilung: **28.12.2011**
(21) Anmeldenummer: 06001768.8
(22) Anmeldetag: 27.01.2006
(51) Int. Cl.: B62D 25/14, B62D 29/00, B60R 16/02

(54) **Querträgermodul für ein Kraftfahrzeug**
Transverse support beam for a vehicle
Poutre transversale de support pour véhicule

(30) Priorität: 01.02.2005 DE 102005004605
(43) Veröffentlichungstag der Anmeldung: 02.08.2006
(73) Patentinhaber: Lisa Dräxlmaier GmbH, 84137 Vilsbiburg (DE)
(72) Erfinder: Riester, Christoph, 85445 Oberding (DE); Hofer, Guido, 84187 Weng (DE); Feineis, Martin, 94034 Landshut (DE)
(74) Vertreter: HOFFMANN EITLE

(56) Entgegenhaltungen:
- DE-C1- 10 145 357
- US-A1- 2002 153 750

## Beschreibung

### Gebiet der Erfindung

Die Erfindung betrifft ein Querträgermodul zur Anbringung unter der Instrumententafel eines Kraftfahrzeugs. Querträger von Kraftfahrzeugen dienen als Aufnahme verschiedener Cockpitkomponenten und der Verschraubung der darüber angeordneten Instrumententafel.

### Stand der Technik

Üblicherweise werden Querträger im Innenhochdruckverfahren aus einem Stahlrohr hergestellt, an das verschiedene Aufnahmen angeschweißt werden. Zu diesen Aufnahmen gehören beispielsweise eine Aufnahme für den Airbag, Knieprotektoren, die Instrumententafelanbindung, aber auch die Anbindung an die A-Säulen, Tunnelstützen und Lenksäulenaufnahmen. Als Stahlträger ausgestaltete Querträger weisen ein verhältnismäßig hohes Gewicht auf, das sich im Kraftfahrzeug nachteilig auf den Kraftstoffverbrauch auswirkt. Ein weiterer Nachteil derartiger Stahlquerträger besteht darin, dass verhältnismäßig viele Arbeitsschritte erforderlich sind, um die verschiedenen Anbindungen am Stahlquerträger vorzusehen. Schließlich besteht ein wesentlicher Nachteil derartiger Stahlquerträger darin, dass beim Anschweißen dieser Anbindungen darauf zu achten ist, dass ein Verzug des Stahlquerträgers verhindert oder minimiert wird.

Mittlerweile kommen auch verstärkt Magnesiumquerträger zum Einsatz. Derartige Magnesiumquerträger werden im Druckgussverfahren hergestellt. Der Vorteil besteht darin, dass Anbindungen mitangeformt werden können und Gewicht eingespart wird. Magnesiumquerträger weisen allerdings den Nachteil auf, dass sie verhältnismäßig raumintensiv sind. Weiterhin sind Magnesiumquerträger ebenfalls verzugsgefährdet. Der wesentliche Nachteil von Magnesiumquerträgern besteht allerdings darin, dass ihre Nachbearbeitung sowohl in Bezug auf die aufgrund der Feuergefährlichkeit einzuhaltenden Sicherheitsstandards als auch der Entsorgung von Magnesiumspänen als Sondermüll problematisch ist.

Aus der DE 200 08 201 U1 ist ein Instrumententafelträger bekannt, der einen länglichen, schalenartigen Grundkörper und stabilisierende Einlegeteile aus metallischen Werkstoffen aufweist. Diese Elemente sind durch eine angespritzte innere Kunststoffverrippung zu einem Metall-Kunststoff-Verbundteil zusammengefügt, das von mindestens einem Luftführungskanal wenigstens teilweise durchsetzt ist. Zusammen mit der Kunststoffverrippung werden gegenüber dem Grundkörper nach außen vorspringende Halter, Konsolen und Anbindungspunkte aus Kunststoff einstückig angespritzt.

Aus der DE 100 64 522 A1 ist ein Querträger bekannt, der aus einem rohrartigen Grundkörper aus Metall besteht, dessen innerer Hohlraum mit Kunststoff ausgekleidet ist, so dass aus Kunststoff bestehende Kanalwände gebildet werden. Der innere Hohlraum wird zur Luftführung verwendet, so dass keine zusätzlichen Luftführungskomponenten wie Blasteile, Luftschläuche oder Ähnliches vorgesehen werden müssen.

Aus der DE 102 40 395 A1 ist es bekannt, einen Querträger für ein Kraftfahrzeug so auszugestalten, dass er einen Rohrbogen entweder aus einem Faserverbundwerkstoff oder in Metall-Kunststoff-Hybridbauweise aufweist, der im Bereich zwischen linker A-Säule und Kardantunnel vorgesehen ist. Der Bereich zwischen Kardantunnel und rechter A-Säule im Fahrzeug kann vollständig aus Kunststoff gefertigt sein oder ebenfalls einen Rohrbogen aus einem Faserverbundwerkstoff oder einen Bogen in Metall-Kunststoff-Hybridbauweise umfassen.

Die DE 101 45 357 C1 beschreibt einen Metall-Kunststoff-Hybridträger, umfassend ein metallisches Profilelement und ein mit dem Profilelement verbundenes Kunststoffelement. Im Bereich des Kunststoffelements ist mindestens ein Befestigungselement für ein Leitungsmedium integriert. Hierdurch können Leitungsmedien innerhalb eines Fahrzeugs platzsparend geführt werden, wobei die Leitungsmedien dennoch einfach zu montieren sind.

Die DE 197 53 178 A1 beschreibt ein Cockpit für Kraftfahrzeuge, bei dem ein Querträgermodul zur Anbringung unter der Instrumententafel eines Kraftfahrzeugs vorgesehen ist. Dieses Querträgermodul umfasst ein Metallprofil, das zumindest bereichsweise mit Kunststoff umgeben ist, wobei ein Rinnenförmiger Kunststoffkanal zur Führung eines Leitungssaftes einstückig angeformt ist.

Allen oben genannten Querträgern im Stand der Technik ist gemeinsam, dass versucht wird, bei vorgegebener Festigkeit, das Gewicht soweit wie möglich zu verringern.

### Darstellung der Erfindung

Der Erfindung liegt die Aufgabe zugrunde, einen Querträger zu schaffen, der bei einfacher Fertigung einen hohen Integrationsgrad besitzt, und der besonders einfach mit der Fahrzeugkarosserie verbindbar ist.

Diese Aufgabe wird durch ein Querträgermodul mit den Merkmalen des Anspruchs 1 gelöst. Bevorzugte Ausführungsformen folgen aus den übrigen Ansprüchen.

Der Erfindung liegt der Gedanke zugrunde, einen Querträger vorzusehen, der bei geringem Gewicht wenig Bauraum benötigt. Indem das Metallrohr zumindest bereichsweise mit Kunststoff umgeben ist und zusätzlich ein Kunststoffkanal zur Führung eines Leitungssatzes einstückig angeformt ist, wird zum einen durch das Metallrohr selbst eine hohe Steifigkeit des Querträgers ermöglicht, gleichzeitig aber auch überall dort, wo keine hohe Festigkeit nötig ist, an das Metallrohr angeformte Kunststoff eingesetzt. Somit wird an denjenigen Stellen, an denen eine hohe Festigkeit und Steifigkeit gefordert ist, dies durch den Einsatz des Metallrohrs realisiert. Beispiele für derartige Stellen sind die Aufnahme der Lenksäulenanbindung oder die Sicherung der Position des Airbags im Crashfall. Das Metallrohr zwischen den A-Säulen eines Kraftfahrzeugs besitzt generell die Aufgabe, Kräfte bei einem Seitencrash aufzunehmen und die Form der Fahrgastzelle zu stabilisieren. An Stellen, die lediglich zur Anbindung diverser angrenzender Bauteile dienen, können diese aus Kunststoff angeformt werden. Beispiele hierfür sind die Anbindung der Instrumententafel, des Handschuhkastens und auch die oben erwähnte Führung des Leitungssatzes, über den sich zusätzlich ein hoher Integrationsgrad erreichen lässt.

Ein weiterer Vorteil besteht darin, dass der Kunststoff in einem einzigen Fertigungsschritt an und um das Metallrohr gespritzt werden kann. Ein weiterer Vorteil besteht schließlich darin, dass die vorgeschlagene Hybridbauweise zum einen die Schwingungsmasse verringert und zum anderen einen Querträger mit relativ hoher Eigenfrequenz schafft. Auf diese Weise wird ein Querträgermodul mit hohem Schwingungskomfort erhalten.

Gemäß der Erfindung ist das Metallrohr an beiden Enden verquetscht, wobei sich in beiden verquetschten Enden Bohrungen befinden. Die an den gequetschten Enden vorgesehenen Bohrungen dienen bei der Montage des Querträgermoduls in der Fahrzeugkarosserie als Anschraublaschen für die A-Säulen. Der Vorteil dieser Ausführung besteht darin, dass keine zusätzlichen Haltewinkel, wie sie sonst im Stand der Technik für die A-Säulenanbindung üblich sind, angeschweißt werden müssen. Es kann somit der zusätzliche Fertigungsschritt des Anschweißens einer A-Säulenanbindung entfallen, wodurch es auch zu keinen Verzugsproblemen an diesen Stellen kommt.

Es wird bevorzugt, wenn das Querträgermodul zusätzlich angespritzte Kunststofflaschen an den verquetschten Enden des Metallrohres aufweist und sich in den angespritzten Kunststofflaschen jeweils eine Durchgangsbohrung befindet. Diese weitere Durchgangsbohrung dient einer weiteren Anbindung des Querträgermoduls an den A-Säulen, insbesondere um eine Rotation des Querträgermoduls um die Längsachse des Metallrohres auszuschließen.

Nach einer bevorzugten Ausführungsform der Erfindung besteht das Metallrohr aus Stahl und ist vorzugsweise nahtlos. Generell lässt sich das Material des Metallrohres im Hinblick auf die geforderten mechanischen Eigenschaften auswählen. Weiterhin ist abhängig vom Fahrzeugtyp auch stärkeres Gewicht entweder auf eine Bauraumoptimierung oder aber Gewichtsoptimierung zu legen, wodurch ebenfalls die geeignete Wahl des Materials für das Metallrohr beeinflusst ist. Schließlich orientiert sich die Materialwahl auch aufgrund des direkten Kontaktes zwischen dem Metallrohr und der A-Säule im Kraftfahrzeug an Korrosionserfordernissen bei einer entsprechenden Materialpaarung. Das Stahlrohr ist vorzugsweise nahtlos, doch kann es sich auch um ein längsnahtgeschweißtes Stahlrohr handeln. Bevorzugt ist es, dass die Außenabmessungen des Stahlrohrs eng toleriert sind, damit das Spritzwerkzeug dicht mit dem Stahlrohr abschließt und sich beim bereichsweisen Umspritzen des Stahlrohrs mit Kunststoff eine hohe Fertigungsqualität erreichen lässt.

Vorzugsweise ist der verwendete Kunststoff faserverstärkt und am meisten bevorzugt glasfaserverstärkt. Hierbei kann beispielsweise PP GF30 verwendet werden. Durch den Einsatz von faserverstärktem Kunststoff lässt sich bei geringem Gewicht eine hohe mechanische Festigkeit des das Metallrohr umgebenden Kunststoffs erzielen.

Das erfindungsgemäße Querträgermodul besitzt vorzugsweise angeformte Aufnahmen für einen Beifahrerairbag und/oder angeformte Aufnahmen für Knieprotektoren und/oder angeformte Aufnahmen für eine Radio- und/oder Navigationseinheit. Bei allen genannten Aufnahmen, die alternativ oder in beliebiger Kombination miteinander am Querträgermodul einstückig angeformt sein können, wird die Montage diverser Cockpitkomponenten erleichtert. Eine weitere Alternative oder in Kombination vorgesehene angeformte Aufnahme dient der Kardantunnelanbindung. Eine Kardantunnelanbindung besitzt den Vorteil, dass das Querträgermodul zwischen den Befestigungspunkten jeweils an den A-Säulen einen zusätzlichen Befestigungspunkt zur Fahrzeugkarosserie aufweist, wodurch zum einen die Festigkeit des Gesamtverbunds erhöht wird und zum anderen auch das Schwingungsverhalten des Querträgermoduls günstig beeinflusst wird.

Nach einer bevorzugten Ausführungsform weist das Querträgermodul zusätzlich eine angeformte Anbindung zur Befestigung an der Stirnwand des Cockpits auf. Diese ebenfalls einstückig aus Kunststoff angeformte Anbindung zur Befestigung an der Stirnwand kann bei der Montage des Querträgermoduls mit der Stirnwand verschraubt werden. Auf diese Weise werden Kräfte und Momente, die durch das Gewicht des Lenkrades hervorgerufen werden, aufgenommen und auf dem kürzesten Weg in den Rohbau eingeleitet.

Nach einer bevorzugten Ausführungsform der Erfindung umfasst das Querträgermodul weiterhin Bereiche am Metallrohr, die nicht mit Kunststoff umgeben sind und zur Anbringung von Verbindungselementen dienen, über welche eine Anschraubplatte der Lenksäule befestigbar ist. Die Integration der Lenksäulenanbindung kann über Verbindungselemente erfolgen, die Rohrschellen sind. Auf diese Weise wird auch im Bereich der Lenksäulenanbindung auf eine Schweißverbindung mit entsprechenden Verzugsproblemen verzichtet. Um eine sichere Anbringung zu ermöglichen, erfolgt dies direkt am Metallrohr, d.h. an einer Stelle, die nicht mit Kunststoff umgeben ist.

Nach einer bevorzugten Ausführungsform der Erfindung umfasst das Querträgermodul weiterhin Schaumelemente, die den im Kunststoffkanal geführten Leitungssatz umgeben, in den Kunststoffkanal einsteckbar sind und so bemessen sind, dass sie sich im Kunststoffkanal elastisch aufweiten und gegen dessen Innenwand verklemmen. Vorzugsweise bestehen die Schaumelemente aus PE-Schaum, Moosgummi oder ähnlichen Materialien. PE-Schaum ist sehr kostengünstig, während Moosgummi in Bezug auf Elastizität und den für die Klemmung im Kunststoffkanal wichtigen Reibwert vorteilhaft ist. Der Vorteil der Schaumelemente besteht darin, dass verschiedene Dicken von Leitungssätzen durch die Elastizität der Schaumelemente aufgenommen werden können. Unterschiedlich dicke Leitungssätze treten insbesondere bei der Verwendung von kundenspezifischen Kabelbäumen auf. Durch die Komprimierbarkeit der Schaumelemente und deren Rückfedereigenschaften kann eine Fixierung des Leitungssatzes innerhalb des Kunststoffkabelkanals erfolgen. Weiterhin kann auf eine aufwändige vollständige Umwicklung des Bündels von Einzeladern mit Klebeband verzichtet werden, weil die Schaumelemente ein Klappern der Einzeladern im Kunststoffkanal verhindern.

Vorzugsweise sind im Kunststoffkanal weiterhin parallel zueinander angeordnete Führungsrillen angeformt, zwischen welche jeweils ein Schaumelement einschiebbar ist. Auf diese Weise lässt sich nicht nur das positionsgenaue Einschieben der Schaumelemente erleichtern, sondern auch die exakte Position der einzelnen Schaumelemente im Kunststoffkanal sicherstellen.

Nach einer bevorzugten Ausführungsform umfasst der im Kunststoffkanal geführte Leitungssatz Einzeladern, die im Wesentlichen nur durch Abbinder zusammengehalten sind. Abbinder werden dazu verwendet, um die Position abzweigender Leitungen zu definieren. Mit anderen Worten, kann die vollständige Umwicklung des Bündels von Einzeladern entfallen und es sind nur noch Abbinder an denjenigen Stellen notwendig, an denen Einzeladern oder Teilstränge definiert abzweigen.

Vorzugsweise ist der Kunststoffkanal so dimensioniert, um einen Leitungssatz für das gesamte Bordnetz aufzunehmen. Der Leitungssatz umfasst dabei auch einen Motorraumleitungssatz, der vorzugsweise von einer Platte oder Tülle umgeben ist, deren Abmessungen auf die Größe einer Öffnung in der Stirnwand des Fahrzeugs abgestimmt ist. Es lässt sich somit mit der Montage des Querträgermoduls ein Leitungssatz im Kunststoffkanal mitmontieren, der bereits den Motorraumleitungssatz umfasst und der durch eine entsprechende Öffnung in der Stirnwand in den Motorraum durchgeführt wird. Um die entsprechende Öffnung in der Stirnwand wieder dicht verschließen zu können, ist hierzu bereits die entsprechende Platte oder Tülle vorgesehen.

### Kurze Beschreibung der Zeichnungen

Nachfolgend wird die Erfindung rein beispielhaft anhand der beigefügten Figuren beschrieben, in denen:
- Fig. 1: ein gesamtes Querträgermodul gemäß der Erfindung mit integriertem Leitungssatz darstellt;
- Fig. 2: eine Detailansicht des Querträgermoduls im Bereich der Lenksäulenanbindung zeigt; und
- Fig. 3: einen Schnitt darstellt, der durch das in Fig. 1 mit der Schnittebene 3-3 dargestellte Schaumelement führt.

### Wege zur Ausführung der Erfindung

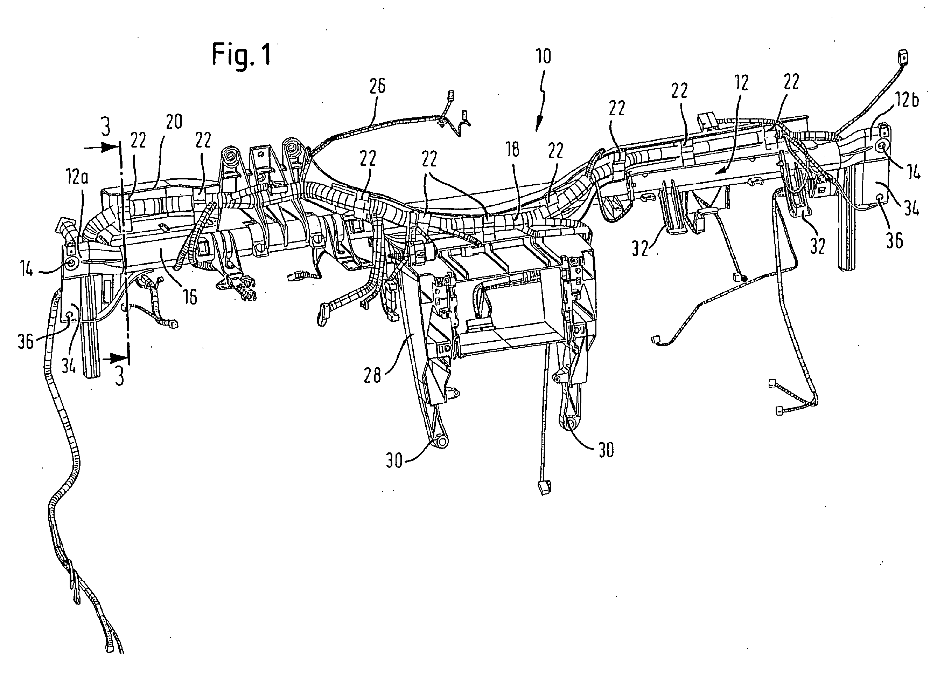

Das allgemein mit Referenzziffer 10 bezeichnete Querträgermodul ist in Fig. 1 in Bezug auf eine spezielle Formgebung und Formgestaltung des Kunststoffkanals sowie der einzelnen Anbindungselemente dargestellt. Es sollte aber deutlich sein, dass die spezielle Geometrie nur beispielhaft zu verstehen ist, sofern sich dies nicht aus der nachfolgenden Erläuterung ergibt.

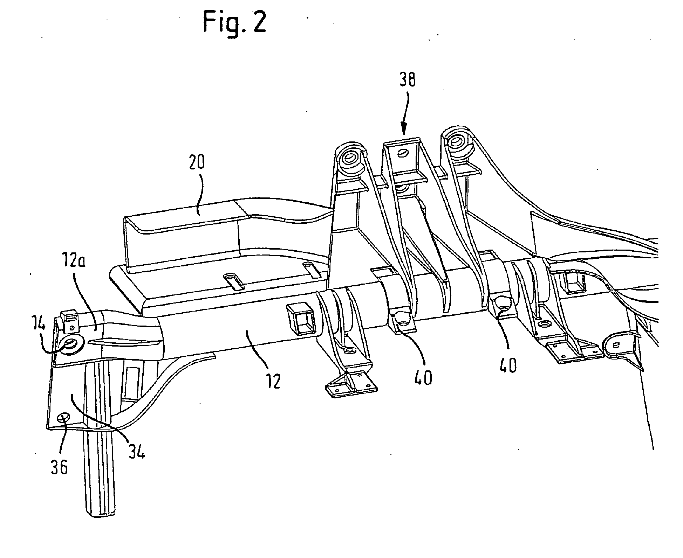

Der dargestellte Querträger dient der Anbringung unter der Instrumententafel eines Fahrzeuges und wird bei der Montage an die A-Säulen (nicht dargestellt) eines Kraftfahrzeuges angebunden. Das Querträgermodul umfasst ein nahtloses oder längsnahtgeschweißtes Metallrohr, vorzugsweise Stahlrohr, dessen Außenabmessungen eng toleriert sind. Das Stahlrohr 12 ist an seinen beiden Enden 12a und 12b in der in Fig. 1 dargestellten Weise verquetscht. Eine detaillierte Ansicht des Endes 12a folgt aus der Fig. 2. An diesen gequetschten Enden 12a und 12b befinden sich Bohrungen 14, die als Anschraublaschen für die A-Säulen dienen. Die Bohrungen 14 befinden sich somit im Bereich des Stahlrohres 12, wodurch der Querträger eine starre Verbindung zwischen den A-Säulen herstellt. Um insbesondere auch hohe auftretende Kräfte im Falle eines Seitencrashs aufnehmen zu können, ist zudem das Stahlrohr 12 gerade ausgeführt, d.h. das Stahlrohr 12 weist keine Biegungen auf, an denen bei in das Stahlrohr über die verquetschten Enden eingeleiteten Druckkräften Biegeverformungen auftreten können.

Bei der Herstellung des Querträgers wird das Stahlrohr 12 in einer Spritzgussanlage mit Kunststoff 16 umspritzt. Hierbei wird bevorzugt faserverstärkter Kunststoff, wie z.B. glasfasergefüllter Kunststoff eingesetzt. Als besonders geeignet hat sich hierbei das Material PP GF30 erwiesen. Das Stahlrohr 12 kann vollständig mit Kunststoff umspritzt sein, aber auch, wie später anhand der Fig. 2 erläutert werden wird, bereichsweise nicht mit Kunststoff umspritzt sein. Soll das Stahlrohr 12 nicht vollständig umspritzt werden, sind besondere Anforderungen an die Maßhaltigkeit der Werkzeuge sowie des Stahlrohres in der Spritzgussanlage gestellt, weshalb das Stahlrohr 12 in Bezug auf die Außenabmessungen eng toleriert sein sollte.

Der Vorteil des Umspritzens des Stahlrohres 12 mit Kunststoff besteht darin, dass an Stellen, an denen eine hohe Festigkeit und Steifigkeit gefordert ist, diese durch das Stahlrohr realisiert werden kann, während an Stellen, die lediglich zur Anbindung von später eingehender beschriebenen Bauteilen dienen, diese aus Kunststoff angeformt werden können. In gleicher Weise ist es auch möglich, innerhalb des verwendeten Kunststoffs eine weitere Differenzierung zu treffen. So könnte ein faserverstärkter und insbesondere glasfasergefüllter Kunststoff nur an denjenigen Stellen eingesetzt werden, an denen wiederum erhöhte mechanische Erfordernisse an den Kunststoff gestellt werden, während in anderen Bereichen herkömmlicher Kunststoff ohne Faserverstärkung verwendet werden kann. Bei dem in Fig. 1 dargestellten Querträgermodul sind fast alle sichtbaren Bauteile mit Ausnahme der elektrischen Leitungen in Kunststoff ausgeführt. Sämtliche Kunststoffteile können hierbei in einem einzigen Fertigungsschritt angespritzt werden.

Im Folgenden soll besonderes Augenmerk auf den hohen Integrationsgrad des dargestellten Querträgermoduls gerichtet werden.

Die Anbindung des gesamten Leitungssatzes 18 erfolgt in einem am Stahlrohr 12 ebenfalls angeformten Kunststoffkanal 20. In dem Kanal 20 wird der Kabelsatz geführt und über Schaumelemente 22 fixiert, aber auch geschützt. Die Anzahl der im Querträgermodul verwendeten Schaumelemente 22, die z.B. aus PE-Schaum RG30 bestehen können, ist in Fig. 1 nur beispielhaft und kann selbstverständlich entsprechend der Geometrie des angeformten Kunststoffkanals 20 wie auch anderen Erfordernissen variieren.

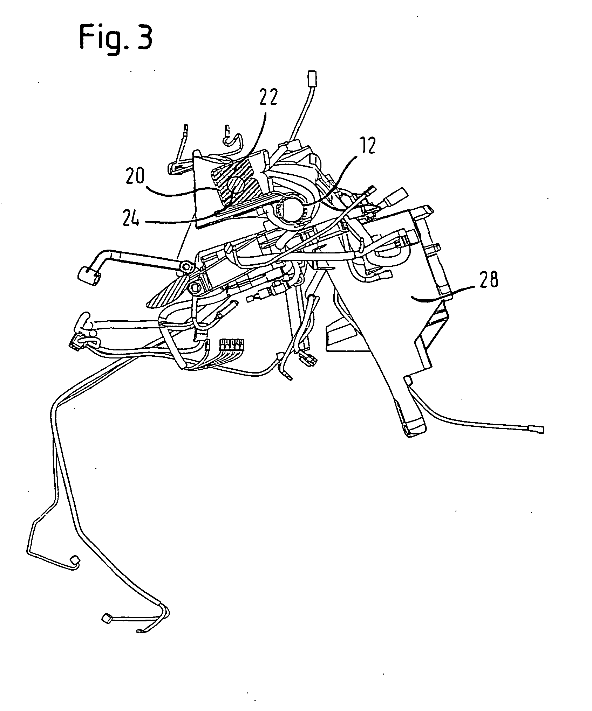

Ein derartiges Schaumelement 22 im Kunststoffkanal 20 ist in einer Schnittdarstellung auch in Fig. 3 dargestellt. Das Schaumelement 22 weist eine im Wesentlichen mittig angeordnete Öffnung auf, durch welche der Leitungssatz in Form des an einem bestimmten Schaumelement 22 vorhanden Bündels 24 aus Einzeladern verläuft. Dieses Bündel 24 von Einzeladern wird durch die Elastizität des Schaumelements 22 elastisch umschlossen. Das Schaumelement 22 hat zudem eine Form, dass es in den einseitig offenen, rinnenförmigen Kunststoffkanal 20 eingeführt werden kann und sich darin elastisch so aufweitet, dass sich im Kunststoffkanal 20 eine Klemmverbindung bildet. Eine weitere Funktion der Schaumelemente 22 besteht darin, dass der Leitungssatz bzw. das Bündel 24 von Einzeladern von den Innenwänden des Kunststoffkanals 20 entfernt gehalten wird, so dass ein Klappern der Einzeladern verhindert werden kann. Deshalb ist eine vollständige Umwicklung des Bündels von Einzeladern mit Klebeband nicht mehr notwendig, obwohl dies in dem dargestellten Ausführungsbeispiel der Fall ist.

Alternativ zu den in Fig. 1 und 3 dargestellten Schaumelementen 22 kommen aber auch andere Befestigungsmöglichkeiten in Frage, wie handelsübliche Kabelbinder oder aufsteckbare, selbstklemmende Stanzbiegeteile.

Von dem Leitungssatz 18 zweigen einzelne Teilstränge wie der Cockpitleitungssatz 26 ab.

Als weitere Kabelsatzintegrationsstufe könnte auch der Motorraumleitungssatz mitgeliefert werden, der ebenfalls im Kunststoffkanal 20 geführt wird und vom Leitungssatz 18 abzweigt. Der Motorraumleitungssatz würde durch eine Öffnung in der Stirnwand gefädelt werden und anschließend die Öffnung in der Stirnwand mit einer am Kabelsatz befestigten Kunststoffplatte oder Tülle verschlossen werden.

Eine weitere Integrationsstufe betrifft die Integration einer Haltekonsole 28, die ebenfalls einstückig angeformt ist und eine spezielle Anbindungsgeometrie zur Aufnahme einer Radioeinheit oder Navigationseinheit aufweist. Weiterhin ist es möglich, Kardantunnelabstützungen 30 im Kunststoffteil zu integrieren. Durch das Vorsehen der Kardantunnelanbindungen 30 wird die Gesamtstabilität des Querträgermoduls im Kraftfahrzeug durch die zusätzliche Karosserieabstützung erhöht. Darüber hinaus stellen die Kardantunnelanbindungen auch eine Schwingungsabstützung dar. Weitere Anbindungen 32 betreffen die Befestigung eines Handschuhfachs sowie angeformte Laschen 34 im Bereich der gequetschten Enden 12a und 12b des Stahlrohrs 12, in denen sich Bohrungen 36 befinden. Die Bohrungen 36 dienen dazu, eine zusätzliche Anbindung zur A-Säule herzustellen.

Eine weitere Integrationsstufe betrifft die Integration der Lenksäulenanbindung. Zu diesem Zweck besitzt das Querträgermodul eine ebenfalls aus Kunststoff angespritzte Anbindung 38, die mit der Stirnwand (nicht dargestellt) verschraubt wird. Auf diese Weise werden Kräfte und Momente, die durch das Gewicht des Lenkrades hervorgerufen werden, aufgenommen und auf dem kürzesten Weg in den Rohbau eingeleitet. Des Weiteren sind Rohrschellen 40 vorgesehen, die direkt um nichtumspritzte Teile des Stahlrohrs 12 herum befestigt sind und an denen die Anschraubplatte der Lenksäule (nicht dargestellt) am Querträgermodul befestigbar ist.

Ohne in der vorangegangenen Beschreibung auf sämtliche Anbindungslaschen eingegangen zu sein, wird aus der vorangehenden Beschreibung deutlich, dass das erfindungsgemäße Querträgermodul einen hohen Integrationsgrad aufweist, indem in einem einzigen Arbeitsschritt eine Vielzahl von Kunststoffanbindungen für diverse angrenzende Bauteile geschaffen wird. Insbesondere das Vorsehen des angeformten Kunststoffkanals 20 ermöglicht es, wahlweise einzelne Teilleitungssätze oder einen kompletten Leitungssatz im Querträgermodul zu führen.

## Patentansprüche

1. Querträgermodul (10) zur Anbringung unter der Instrumententafel eines Kraftfahrzeuges, umfassend ein Metallrohr (12), das zumindest bereichsweise mit Kunststoff (16) umgeben ist, wobei ein rinnenförmiger Kunststoffkanal (20) zur Führung eines Leitungssatzes (18) einstückig angeformt ist, wobei
das Metallrohr (12) an beiden Seiten verquetscht (12a, 12b) ist und sich an beiden verquetschten Enden (12a, 12b) Bohrungen (14) befinden.

2. Querträgermodul nach Anspruch 1, weiter umfassend, angespritzte Kunststofflaschen (34) an den verquetschten Enden (12a, 12b) des Metallrohres (12), in denen sich jeweils eine Durchgangsbohrung (36) befindet.

3. Querträgermodul nach einem der vorhergehenden Ansprüche,
**dadurch gekennzeichnet, dass**
das Metallrohr (12) aus Stahl besteht und vorzugsweise nahtlos ist.

4. Querträgermodul nach einem der vorhergehenden Ansprüche,
**dadurch gekennzeichnet, dass**
der Kunststoff faserverstärkt ist, vorzugsweise glasfaserverstärkt ist.

5. Querträgermodul nach einem der Ansprüche 1 bis 3,
**dadurch gekennzeichnet, dass**
der Kunststoff bereichsweise faserverstärkt ist.

6. Querträgermodul nach Anspruch 4 oder Anspruch 5,
**dadurch gekennzeichnet, dass**
der faserverstärkte Kunststoff Polypropylen ist, das mit Glasfasern verstärkt ist.

7. Querträgermodul nach einem der vorhergehenden Ansprüche, weiter umfassend angeformte Aufnahmen für einen Beifahrerairbag.

8. Querträgermodul nach einem der vorhergehenden Ansprüche, weiter umfassend angeformte Aufnahmen für Knieprotektoren.

9. Querträgermodul nach einem der vorhergehenden Ansprüche, weiter umfassend Aufnahmen (28) für eine Radio- und/oder Navigationseinheit.

10. Querträgermodul nach einem der vorhergehenden Ansprüche, weiter umfassend Aufnahmen (30) für Kardantunnelanbindungen.

11. Querträgermodul nach einem der vorhergehenden Ansprüche, weiter umfassend eine angeformte Anbindung (38) zur Befestigung an der Stirnwand des Cockpits.

12. Querträgermodul nach einem der vorhergehenden Ansprüche, weiter umfassend mindestens einen Bereich am Metallrohr (12), der nicht mit Kunststoff umgeben ist und zur Anbringung von mindestens einem Verbindungselement (40) dient, über welches eine Anschraubplatte der Lenksäule befestigbar ist.

13. Querträgermodul nach einem der vorhergehenden Ansprüche, weiter umfassend den im Kunststoffkanal (20) geführten Leitungssatz (18) umgebende Schaumelemente (22), die in den Kunststoffkanal einsteckbar sind und so bemessen sind, dass sie sich im Kunststoffkanal (20) elastisch aufweiten und gegen dessen Innenwand verklemmen.

14. Querträgermodul nach Anspruch 13,
**dadurch gekennzeichnet, dass**
die Schaumelemente (22) aus PE-Schaum, Moosgummi oder ähnlichen Materialien bestehen.

15. Querträgermodul nach Anspruch 13 oder 14, weiter umfassend im Kunststoffkanal (20) angeformte, parallel zueinander angeordnete Führungsrippen, zwischen welche jeweils ein Schaumelement (22) einschiebbar ist.

16. Querträgermodul nach einem der Ansprüche 13 bis 15,
**dadurch gekennzeichnet, dass**
der im Kunststoffkanal (20) geführte Leitungssatz (18) Einzeladern umfasst, die im Wesentlichen nur durch Abbinder zusammengehalten sind.

17. Querträgermodul nach einem der vorhergehenden Ansprüche, **dadurch gekennzeichnet, dass**
der Kunststoffkanal (20) so dimensioniert ist, um einen Leitungssatz (18) für das gesamte Bordnetz aufzunehmen.

18. Querträgermodul nach einem der Ansprüche 1 bis 17,
**dadurch gekennzeichnet, dass**
der Leitungssatz (18) einen Motorraumleitungssatz umfasst, der von einer Platte oder Tülle, vorzugsweise aus Kunststoff, umgeben ist, deren Abmessungen auf die Größe einer Öffnung in der Stirnwand des Fahrzeugs abgestimmt ist.

19. Kraftfahrzeug mit einem Querträgermodul nach einem der vorhergehenden Ansprüche.

## Claims

1. Transverse support module (10) for attachment below the instrumental panel of a motor vehicle comprising a metal tube (12), which is surrounded at least in some regions by plastic (16), wherein a groove-like plastic duct (20) to guide a harness (18) is moulded on to be integral, wherein the metal tube (12) is pinched (12a, 12b) on both sides and boreholes (14) are located on both pinched ends (12a, 12b).

2. Transverse support module according to claim 1, further comprising plastic tabs (34) injection moulded onto the pinched ends (12a, 12b) of the metal tube (12), in which in each case a through-hole (36) is located.

3. Transverse support module according to one of the preceding claims, **characterised in that** the metal tube (12) consists of steel and is preferably seamless.

4. Transverse support module according to one of the preceding claims, **characterised in that** the plastic is fibre-reinforced, preferably glass fibre-reinforced.

5. Transverse support module according to one of claims 1 to 3, **characterised in that** the plastic is fibre-reinforced in some regions.

6. Transverse support module according to claim 4 or claim 5, **characterised in that** the fibre-reinforced plastic is polypropylene which is reinforced with glass fibres.

7. Transverse support module according to one of the preceding claims, further comprising moulded-on receivers for a passenger airbag.

8. Transverse support module according to one of the preceding claims, further comprising moulded-on receivers for knee protectors.

9. Transverse support module according to one of the preceding claims, further comprising receivers (28) for a radio unit and/or navigation unit.

10. Transverse support module according to one of the preceding claims, further comprising receivers (30) for Cardan tunnel ties.

11. Transverse support module according to one of the preceding claims, further comprising a moulded-on tie (38) for attachment to the end-face wall of the cockpit.

12. Transverse support module according to one of the preceding claims, further comprising at least one region on the metal tube (12) which is not surrounded by plastic and serves for attachment of at least one connecting element (40), by means of which a screw-on plate of the steering column can be attached.

13. Transverse support module according to one of the preceding claims, further comprising foam elements (22) surrounding the harness (18) guided in the plastic duct (20) and which can be pushed into the plastic duct and have dimensions so that they expand resiliently in the plastic duct (20) and become jammed against its inner wall.

14. Transverse support module according to claim 13, **characterised in that** the foam elements (22) consist of PE foam, expanded rubber or similar materials.

15. Transverse support module according to claim 13 or 14, further comprising guide ribs moulded on in the plastic duct (20) and arranged parallel to one another, between which in each case a foam element (22) can be pushed.

16. Transverse support module according to one of claims 13 to 15, **characterised in that** the harness (18) guided in the plastic duct (20) comprises individual wires which are held together essentially only by ties.

17. Transverse support module according to one of the preceding claims, **characterised in that** the plastic duct (20) has dimensions so as to accommodate a harness (18) for the entire on-board power supply.

18. Transverse support module according to one of claims 1 to 17, **characterised in that** the harness (18) comprises an engine compartment harness which is surrounded by a plate or socket, preferably made from plastic, the dimensions of which are matched to the size of an opening in the end-face wall of the vehicle.

19. Motor vehicle having a transverse support module according to one of the preceding claims.

## Revendications

1. Module formant poutre transversale (10) destiné à être monté au-dessous du tableau à instruments d'un véhicule automobile, comprenant un tube en métal (12) qui est entouré au moins localement de matière plastique (16), un canal en matière plastique (20) en forme de goulotte étant conformé d'une seule pièce pour le guidage d'un groupe de lignes (18), dans lequel
le tube en métal (12) est écrasé (12a, 12b) sur les deux côtés, et il est prévu des perçages (14) aux deux extrémités écrasées (12a, 12b).

2. Module formant poutre transversale selon la revendication 1, comprenant en outre des pattes en matière plastique injectée (34) au niveau des extrémités écrasées (12a, 12b) du tube en métal (12), dans lesquelles se trouve un perçage traversant respectif (36).

3. Module formant poutre transversale selon l'une des revendications précédentes, **caractérisé en ce que** le tube en métal (12) est en acier et de préférence dépourvu de cordon de soudure.

4. Module formant poutre transversale selon l'une des revendications précédentes, **caractérisé en ce que** la matière plastique est renforcée par des fibres, de préférence renforcée par des fibres de verre.

5. Module formant poutre transversale selon l'une des revendications 1 à 3, **caractérisé en ce que** la matière plastique est localement renforcée par des fibres.

6. Module formant poutre transversale selon la revendication 4 ou la revendication 5, **caractérisé en ce que** la matière plastique renforcée par des fibres est du polypropylène, qui est renforcé par des fibres de verre.

7. Module formant poutre transversale selon l'une des revendications précédentes, comprenant en outre des logements conformés pour un airbag de passager.

8. Module formant poutre transversale selon l'une des revendications précédentes, comprenant en outre des logements conformés pour des protecteurs de genoux.

9. Module formant poutre transversale selon l'une des revendications précédentes, comprenant en outre des logements (28) pour une unité radio et/ou une unité de navigation.

10. Module formant poutre transversale selon l'une des revendications précédentes, comprenant en outre des logements (30) pour des liaisons tunnel à la cardan.

11. Module formant poutre transversale selon l'une des revendications précédentes, comprenant en outre une liaison conformée (38) pour la fixation à la paroi frontale du cockpit.

12. Module formant poutre transversale selon l'une des revendications précédentes, comprenant en outre au moins une zone du tube en métal (12) qui n'est pas entourée de matière plastique et qui sert au montage d'au moins un élément de liaison (40), via lequel une plaque de vissage de la colonne de direction est susceptible d'être fixée.

13. Module formant poutre transversale selon l'une des revendications précédentes, comprenant en outre des éléments en mousse (22), entourant le groupe de lignes (18) guidé dans le canal en matière plastique (20), lesquels éléments de mousse peuvent s'étendre dans le canal en matière plastique et sont dimensionnés de telle façon qu'ils s'élargissent élastiquement dans le canal en matière plastique (20) et viennent se coincer contre sa paroi intérieure.

14. Module formant poutre transversale selon la revendication 13, **caractérisé en ce que** les éléments en mousse (22) sont en mousse de polyéthylène, en caoutchouc mousse, ou en matériaux analogues.

15. Module formant poutre transversale selon la revendication 13 ou 14, comprenant en outre des nervures de guidage conformées dans le canal en matière plastique (20) et agencées parallèlement les unes aux autres, entre lesquelles peut être enfilé un élément en mousse respectif (22).

16. Module formant poutre transversale selon l'une des revendications 13 à 15, **caractérisé en ce que** le groupe de lignes (18) guidé dans le canal en matière plastique (20) comprend des lignes individuelles qui sont retenues ensemble essentiellement uniquement par des adhésifs.

17. Module formant poutre transversale selon l'une des revendications précédentes, **caractérisé en ce que** le canal en matière plastique (20) est dimensionné de telle façon qu'il est capable de recevoir un groupe de lignes (18) pour la totalité du réseau de bord.

18. Module formant poutre transversale selon l'une des revendications 1 à 17, **caractérisé en ce que** le groupe de lignes (18) comprend un groupe de lignes du côté de l'espace moteur, qui est entouré par une plaque ou par un manchon, de préférence en matière plastique, et dont les dimensions sont ajustées à la taille d'une ouverture dans la paroi frontale du véhicule.

19. Véhicule comprenant un module formant poutre transversale selon l'une des revendications précédentes.
